# EUROPÄISCHE PATENTSCHRIFT

(11) **EP 3 798 530 B1**
(45) Veröffentlichungstag und Bekanntmachung des Hinweises auf die Patenterteilung: **23.08.2023**
(21) Anmeldenummer: 20198600.7
(22) Anmeldetag: 28.09.2020
(51) Int. Cl.: F24H 8/00, F24H 9/02, F24H 9/14

(54) **GEHÄUSE ZUM ABFÜHREN VON KONDENSAT EINES HEIZGERÄTS SOWIE HEIZGERÄT MIT EINEM SOLCHEN GEHÄUSE**
HOUSING FOR REMOVING CONDENSATE OF A HEATING DEVICE AND HEATING DEVICE COMPRISING SUCH A HOUSING
BOITIER D'ÉVACUATION DU CONDENSAT D'UN APPAREIL DE CHAUFFAGE AINSI QU'APPAREIL DE CHAUFFAGE DOTÉ D'UN TEL BOITIER

(30) Priorität: 30.09.2019 DE 102019214987
(43) Veröffentlichungstag der Anmeldung: 31.03.2021
(73) Patentinhaber: Robert Bosch GmbH, 70442 Stuttgart (DE)
(72) Erfinder: Steen van der, Peter, 7424 EG Deventer (NL); Schoenmaker, Bart Cornelis, 8084 AR't Harde (NL)

(56) Entgegenhaltungen:
- EP-A2- 1 278 025
- WO-A1-2014/142688
- WO-A1-2019/098719
- DE-A1-102004 018 956
- DE-U1- 20 005 498
- KR-A- 20110 019 173

## Beschreibung

Die Erfindung betrifft ein Gehäuse zum Abführen von Abgas und Kondensat eines Heizgeräts mit einem Anschluss für einen Abgaskanal, wobei zwischen dem Anschluss und dem Abgaskanal eine Dichtung angeordnet ist. Die Erfindung betrifft auch ein Heizgerät mit einem Gehäuse zum Abführen von Kondensat und Abgas.

### Stand der Technik

Bei modernen Heizgeräten in Brennwerttechnik fällt im Abgas Kondensat aus, das in einer Wanne gesammelt und abgeführt wird. Diese Wanne ist ebenfalls vom Abgas durchströmt und weist einen Anschluss für einen Abgaskanal auf. An solche Wannen sind erhöhte Anforderungen hinsichtlich Resistenz gegen aggressives Kondensat sowie Dichtheit aufgrund des durchzuleitenden Abgases gestellt. Aus der DE20005498U1 und der WO2014/142688 sind solche Gehäuse bekannt.

### Vorteile der Erfindung

Das erfindungsgemäße Gehäuse zum Abführen von Abgas und Kondensat eines Heizgeräts zeichnet sich dadurch, dass die Dichtung im Anschluss zwischen einem festen Kragen und einem separaten Anschlagteil eingebracht und gehalten ist. Dadurch ist erreicht, dass Gehäuse, das in der Regel im Spritzgussverfahren hergestellt wird, kostengünstig und weniger fehleranfällig produzierbar ist. Um die Dichtung sicher im Gehäuse zu halten ist es notwendig, entsprechende Kammern mit Hinterschnitten zu erzeugen. Hierfür sind im Spritzgusswerkzeug aufwendige Schieber notwendig. Gerade solche Schieber verteuern das Spritzgusswerkzeug und machen dessen Betrieb aufwendiger.

Durch die in den Unteransprüchen aufgeführten Merkmale werden vorteilhafte Weiterbildungen des erfindungsgemäßen Gehäuses erreicht. So wird eine weitere Vereinfachung des Herstellungsprozesses erreicht, wenn das Gehäuse mindestens zwei fest miteinander verbundenen Gehäuseteile aufweist, wobei ein erstes Gehäuseteil wannenförmig ausgebildet ist, wobei das zweite Gehäuseteil den Anschluss aufweist und wobei das Anschlagteil zwischen dem ersten und dem zweiten Gehäuseteil angeordnet ist. Hierdurch ist es möglich, auch das Anschlagteil einfach und lagefest im Gehäuse unterzubringen.

In einer weiteren vorteilhaften Ausführung weist das Gehäuse mindestens zwei fest miteinander verbundenen Gehäuseteile auf, wobei ein erstes Gehäuseteil wannenförmig ausgebildet ist, wobei das zweite Gehäuseteil den Anschluss aufweist und wobei das Anschlagteil an einem Teilkreis des ersten Gehäuseteils anliegt und sich in den Anschluss erstreckt. Hierdurch kann auch für das Anschlagteil ein einfacher Anschlag erzeugt werden, ohne dass das Spritzgusswerkzeuge aufwändiger wird.

In vorteilhafter Weise kann das Anschlagteil im Anschluss befestigt sein. Hierfür eignen sich zum Beispiel Schweiß- oder Klebeverfahren.

In den durch den Kragen und das Anschlussteil begrenzten Raum ist die Dichtung dann einfach einlegbar.

Ein erfindungsgemäßes Heizgerät zeichnet sich dadurch aus, dass es einen Abgas- und Kondesatsammler mit einem erfindungsgemäßen Gehäuse aufweist.

### Zeichnung

In der Zeichnung sind Ausführungsbeispiele des erfindungsgemäßen Gehäuses dargestellt und in der nachfolgenden Beschreibung näher erläutert. Es zeigen:
Figur 1 schematisch ein Heizgerät mit einem erfindungsgemäßen Gehäuse,
Figur 2 einen Ausschnitt nach Linie II in Figur 1 eines erfindungsgemäßen Gehäuses im Schnitt,
Figur 3 eine Draufsicht auf einen Abgas- und Kondensatsammler und
Figur 4 eine Schrägdarstellung eines weiteren Ausführungsbeispiels.

### Beschreibung

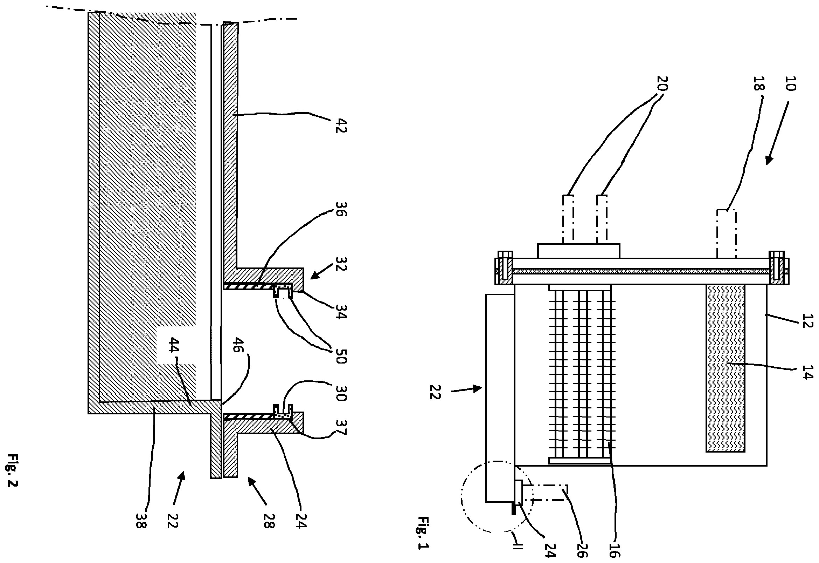

In der Figur 1 ist eine Heizvorrichtung 10 mit einem Gehäuse 12 dargestellt. Im Gehäuse 12 sind ein Brenner 14 sowie ein Wärmetauscher 16 untergebracht. Der Brenner 14 ist in einem oberen Bereich angeordnet und wird über eine nur gestrichelt dargestellten Brenngas-Zuluft-Leitung 18 gespeist. Weitere, den Brenner 14 überwachende Einrichtungen sind nicht dargestellt. In einem unteren Bereich, unterhalb des Brenners 14 ist der Wärmetauscher 16 angeordnet, der über ebenfalls nur gestrichelt dargestellten Leitungen 20 mit einem Heizungsnetz und/oder einem Brauchwassernetz verbunden werden kann.

Unterhalb des Wärmetauschers 16 ist ein Abgas- und Kondensatsammler 22 angeordnet, über den Abgas und Kondensat das Gehäuse 12 verlassen können. Das Abgas wird über einen Anschluss 24 in ein gestrichelt gezeichneten Abgaskanal 26 geführt.

In Figur 2 ist erkennbar, dass der Abgas- und Kondensatsammler 22 ein Gehäuse 28 aufweist. Der Anschluss 24 steht nach oben ab und nimmt eine Dichtung 30 auf. Diese Dichtung 30 ist in Zusammenbaustellung, also wenn der Abgaskanal 26 eingesetzt ist, zwischen dem Abgaskanal 26 und dem Anschluss 24 angeordnet. Sie sorgt dafür, dass kein Abgas in diesem Bereich das Heizgerät 10 unkontrolliert verlassen kann.

Der Anschluss 24 weist an seinem oberen Ende 32 einen Kragen 34 auf. Dieser Kragen 34 stellt eine obere Begrenzung für die Lage der Dichtung 30 dar. Dazu erstreckt sich der Kragen 34 nach innen und reduziert an dieser Stelle den Durchmesser der lichten Weite des Anschlusses 24.

Innerhalb des Anschlusses 24 ist ein Anschlagteil 36 vorgesehen. Dieses liegt umfänglich am inneren Durchmesser an und erstreckt sich axial nur über einen Teil der Höhe des Anschlusses 24. Das Anschlagteil 36 weist eine Dicke auf, die ungefähr der Länge der sich nach innen erstreckenden Auskragung des Kragens 34 entspricht.

Die axiale Länge des Anschlagteils 36 ist so bemessen, dass in Zusammenbaustellung zwischen einem oberen, dem Kragen 34 zugewandten Ende des Anschlagteils 36 und dem Kragen 34 ein Raum 37 verbleibt, in den die Dichtung 30 eingebracht werden kann und der die Dichtung 30 passend aufnimmt. Je nach notwendiger Dichtung 30, beziehungsweise deren Größe, kann ein entsprechendes Anschlagteil 36 eingesetzt und die Größe des Raumes 37 festgelegt werden.

Ist das Gehäuse 28 des Abgas- und Kondensatsammlers 22 einteilig hergestellt, beispielsweise in einem sogenannten Streckblasverfahren, müssen sowohl das Anschlagteil 36 als auch die Dichtung 30 durch die für den Abgaskanal 26 vorgesehen Öffnung eingebracht werden. Dazu weist dann das Anschlagteil 36 die notwendige Elastizität auf. Es ist jedoch auch möglich, die zur Herstellung des Gehäuses 28 des Abgas- und Kondensatsammlers 22 genutzte Spritzgussform bzw. Streckblasform so anzufertigen, dass gegenüber des Kragens 34 ebenfalls eine Öffnung im Gehäuse 28 vorgesehen ist, über die ein Formteil bis zum Hinterschnitt des Kragens 34 ragt. Beim Öffnen der Form wird dieses Formteil mit herausgefahren. Diese zusätzliche Öffnung im Gehäuse 28 kann dann als Abfluss für das gesammelte Kondensat ausgebildet werden.

In Figur 2 ist erkennbar, dass das Gehäuse 28 des Abgas- und Kondensatsammlers 22 zweiteilig aufgebaut ist. Ein erstes wannenförmiges Gehäuseteil 38, im Folgenden auch Wanne 40 genannt, bildet unten den Abschluss des Gehäuses 28. In der Wanne 40 sammelt sich während des Betriebs des Heizgeräts 10 anfallendes Kondensat. Es kann über einen nicht dargestellten Abfluss abfließen. Durch die Wanne 40 ist ebenfalls das Abgas geleitet, das über den Anschluss 24 in den Abgaskanal 26 geführt wird.

Oben wird das Gehäuse 28 des Abgas- und Kondensatssammlers 22 durch ein zweites Gehäuseteil 42 abgeschlossen, das den Anschluss 24 aufweist. Das Anschlagteil 36 ist nun zwischen dem ersten Gehäuseteil 38 und dem zweiten Gehäuseteil 42 angeordnet.

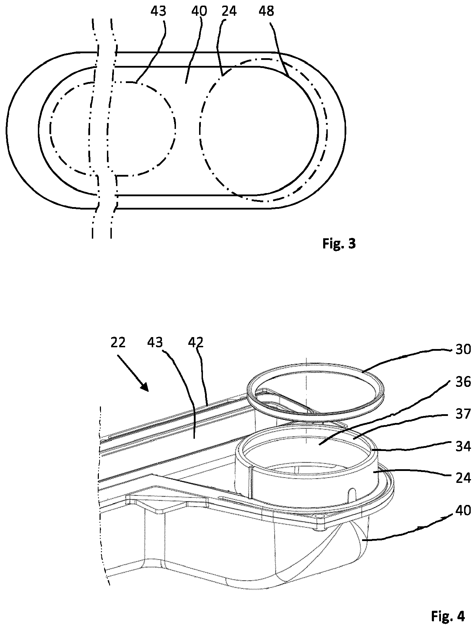

Das zweite Gehäuseteil 42 ist dazu ausgebildet, mit dem Gehäuse 12 Heizgeräts 10 zusammen zu wirken. Es weist hierzu eine Öffnung 43 auf, die in der Figur 3 strichpunktiert angedeutet ist.

Die Wanne 40 und das zweite Gehäuseteil 42 sind fest miteinander verbunden. Im Ausführungsbeispiel wird die Verbindung mittels eines Ultraschallschweißverfahrens hergestellt. Es ist jedoch auch möglich die beiden Gehäuseteile 40 und 42 miteinander zu verkleben oder unter Einlegung einer Flachdichtung miteinander zu verschrauben.

Wie in der Figur 2 weiter zu sehen ist, ist die Wanne 40 etwas kürzer ausgebildet und ragt so mit einer Wand 44 in die Öffnung des Anschlusses 24 hinein. Da die Wand 44 das hintere Ende der Wanne 40 halbkreisförmig abschließt, bildet das obere Ende 46 der Wand 44 einen Teilkreis 48, an dem das Anschlagteil 36 anliegt und sich von dort aus in den Anschluss 24 erstreckt, was in der Figur 3 erkennbar ist.

Wie beschrieben, stützt sich das Anschlagteil 36 im Ausführungsbeispiel an Bereichen des ersten Gehäuseteils 38 ab. Es ist jedoch auch möglich, eine Ausführung ohne eine solche Abstützung bereitzustellen. Dann wird das Anschlagteil 36 im Anschluss 24 befestigt. Dies gelingt beispielsweise durch Verkleben oder Ultraschallschweißen.

Durch die besondere Ausführung ist zwischen dem Kragen 34 und dem Anschlagteil 36 ist ein Raum 37 geschaffen, in den die Dichtung 30 eingelegt werden kann. Sie ragt dann mit Dichtungslippen 50 in die den Abgaskanal 26 aufnehmende Öffnung, die sich im zusammengebauten Zustand an den Abgaskanal anlegen.

Im zweiten Ausführungsbeispiel nach Figur 4 sind gleiche Bauteile mit den gleichen Bezugszahlen wie beim ersten Ausführungsbeispiel benannt. Das zweite Ausführungsbeispiel zeigt einen Abgas- und Kondensatssammler 22, bei dem der Anschluss 24 nicht in Verlängerung der Öffnung 43 vorgesehen ist. Der Anschluss 24 ist in einer seitlichen Region angeordnet. Auch hier ist erkennbar, dass das Anschlagteil 36 im Anschluss 24 so angeordnet ist, dass ein Raum 37 für die Dichtung 30 begrenzt wird.

## Patentansprüche

1. Gehäuse (28) zum Abführen von Abgas und Kondensat eines Heizgeräts (10), mit einem Anschluss (24) für einen Abgaskanal (26), mit einer Dichtung (30) wobei die Dichtung (30) zwischen dem Anschluss (24) und dem Abgaskanal (26) angeordnet werden kann, **dadurch gekennzeichnet, dass** die Dichtung (30) im Anschluss (24) zwischen einem festen Kragen (34) und einem separaten Anschlagteil (36) eingebracht und gehalten ist.

2. Gehäuse (28) nach Anspruch 1, **gekennzeichnet durch** mindestens zwei miteinander verbundene Gehäuseteile (38, 42), wobei ein erstes Gehäuseteil (38) wannenförmig ausgebildet ist, wobei das zweite Gehäuseteil (42) den Anschluss (24) aufweist und wobei das Anschlagteil (36) zwischen dem ersten und dem zweiten Gehäuseteil (38, 42) angeordnet ist.

3. Gehäuse (28) nach einem der vorhergehenden Ansprüche, **gekennzeichnet durch** mindestens zwei miteinander verbundene Gehäuseteile (38,42), wobei ein erstes Gehäuseteil (38) wannenförmig ausgebildet ist, wobei das zweite Gehäuseteil (42) den Anschluss (24) aufweist und wobei das Anschlagteil (36) an einem Teilkreis (48) des ersten Gehäuseteils (28) anliegt und sich in den Anschluss (24) erstreckt.

4. Gehäuse (28) nach einem der vorhergehenden Ansprüche, **dadurch gekennzeichnet, dass** das Anschlagteil (36) im Anschluss (22) befestigt ist.

5. Gehäuse (28) nach einem der vorhergehenden Ansprüche, **dadurch gekennzeichnet, dass** die Dichtung (30) in einen durch den Kragen (34) und das Anschlagteil (36) begrenzten Raum (37) eingelegt ist.

6. Heizgerät (10) mit einem Gehäuse (28) zum Abführen von Abgas und Kondensat nach einem der vorhergehenden Ansprüche.

## Claims

1. Housing (28) for discharging flue gas and condensate of a heater (10), with a connector (24) for a flue gas duct (26), with a seal (30), it being possible for the seal (30) to be arranged between the connector (24) and the flue gas duct (26), **characterized in that** the seal (30) is introduced and held in the connector (24) between a fixed collar (34) and a separate stop part (36).

2. Housing (28) according to Claim 1, **characterized by** at least two housing parts (38, 42) which are connected to one another, a first housing part (38) being of trough-shaped configuration, the second housing part (42) having the connector (24), and the stop part (36) being arranged between the first and the second housing part (38, 42).

3. Housing (28) according to either of the preceding claims, **characterized by** at least two housing parts (38, 42) which are connected to one another, a first housing part (38) being of trough-shaped configuration, the second housing part (42) having the connector (24), and the stop part (36) bearing against a pitch circle (48) of the first housing part (28) and extending into the connector (24).

4. Housing (28) according to one of the preceding claims, **characterized in that** the stop part (36) is fastened in the connector (22).

5. Housing (28) according to one of the preceding claims, **characterized in that** the seal (30) is inserted into a space (37) which is delimited by way of the collar (34) and the stop part (36).

6. Heater (10) with a housing (28) for discharging flue gas and condensate according to one of the preceding claims.

## Revendications

1. Boîtier (28) d'évacuation des gaz d'échappement et du condensat d'un appareil de chauffage (10), comprenant un raccord (24) pour un canal de gaz d'échappement (26), comprenant une garniture (30), la garniture (30) pouvant être disposée entre le raccord (24) et le canal de gaz d'échappement (26),
**caractérisé en ce que** la garniture (30) est insérée et maintenue dans le raccord (24) entre une collerette fixe (34) et une partie de butée séparée (36) .

2. Boîtier (28) selon la revendication 1, **caractérisé par** au moins deux parties de boîtier (38, 42) reliées l'une à l'autre, dans lequel une première partie de boîtier (38) est réalisée en forme de cuvette, dans lequel la deuxième partie de boîtier (42) présente le raccord (24), et dans lequel la partie de butée (36) est disposée entre la première et la deuxième partie de boîtier (38, 42).

3. Boîtier (28) selon l'une quelconque des revendications précédentes, **caractérisé par** au moins deux parties de boîtier (38, 42) reliées l'une à l'autre, dans lequel une première partie de boîtier (38) est réalisée en forme de cuvette, dans lequel la deuxième partie de boîtier (42) présente le raccord (24), et dans lequel la partie de butée (36) est adjacente à un cercle primitif (48) de la première partie de boîtier (28) et s'étend dans le raccord (24).

4. Boîtier (28) selon l'une quelconque des revendications précédentes, **caractérisé en ce que** la partie de butée (36) est fixée dans le raccord (22).

5. Boîtier (28) selon l'une quelconque des revendications précédentes, **caractérisé en ce que** la garniture (30) est insérée dans un espace (37) limité par la collerette (34) et la partie de butée (36).

6. Appareil de chauffage (10) comprenant un boîtier (28) d'évacuation des gaz d'échappement et du condensat selon l'une quelconque des revendications précédentes.
